Europäisches Patentamt

(19) European Patent Office

Office européen des brevets

(11) **EP 0 469 858 B1**

## (12) EUROPEAN PATENT SPECIFICATION

(45) Date of publication and mention
of the grant of the patent:
**27.03.1996 Bulletin 1996/13**

(51) Int. Cl.$^6$: **C08F 210/02**, C08F 2/34,
C08F 4/651

(21) Application number: **91306978.7**

(22) Date of filing: **30.07.1991**

(54) **Ethylene polymers and process for manufacturing them in gas phase**

Ethylenpolymere und Verfahren zur Herstellung derselben in der Gasphase

Polymères d'éthylène et procédé pour les préparer en phase gazeuse

(84) Designated Contracting States:
**AT BE CH DE DK ES FR GB GR IT LI LU NL SE**

(30) Priority: **03.08.1990 FR 9010167**

(43) Date of publication of application:
**05.02.1992 Bulletin 1992/06**

(73) Proprietors:
• **BP Chemicals Limited**
**London EC2M 7BA (GB)**
Designated Contracting States:
**BE CH DE DK ES GB GR IT LI LU NL SE AT**
• **BP CHEMICALS S.N.C.**
**F-92400 Courbevoie (FR)**
Designated Contracting States:
**FR**

(72) Inventors:
• **Bailly, Jean-Claude Andre,**
**BP Chemicals S.N.C.**
**F-13117 Lavera (FR)**
• **Lalanne-Magne, Claudine,**
**BP Chemicals S.N.C.**
**F-13117 Lavera (FR)**

(74) Representative: **Denbigh, Keith Warwick et al**
**BP INTERNATIONAL LIMITED**
**Patents & Agreements Division**
**Chertsey Road**
**Sunbury-on-Thames Middlesex, TW16 7LN (GB)**

(56) References cited:
**EP-A- 0 336 545**         **EP-A- 0 409 492**
**EP-A- 0 415 588**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.9.14/3.4

## Description

The present invention relates to a process for the gas phase manufacture of ethylene polymers or copolymers of ethylene with at least one alpha-olefin containing from 3 to 12 carbon atoms. The process uses a highly active catalyst system.

Catalyst systems of the Ziegler-Natta type comprising the combination of a catalyst containing at least one compound of a transition metal such as titanium, and a cocatalyst containing at least one organometallic compound of a metal such as aluminium, are kwown. It is also known, that the properties of these catalysts can be greatly influenced when the catalyst containing the transition metal compound is employed with a support consisting of a solid inorganic compound such as for example magnesium chloride. In the technique for preparing a supported catalyst the properties of the support and the process for preparing the catalyst, which generally comprises fixing the transition metal compound onto the support, are of very great importance for the catalyst characteristics.

From French Patent FR-B-2,529,211 it is known to polymerize alpha-olefins in the gaseous phase in a fluidized-bed reactor using a process comprising a prepolymerization stage. This process makes use of catalyst systems containing, (1) a catalyst consisting of a solid magnesium chloride support onto which a titanium compound has been deposited and, (2) a cocatalyst consisting of an organoaluminium compound. However, the catalysts used in FR-B-2 529 211 have relatively low titanium contents and have a mediocre activity in olefin polymerization, especially in the polymerization or copolymerization of ethylene. In fact, the polymers or copolymers are manufactured in a relatively low yield and have relatively high residual titanium contents. Also, the residual chlorine contents of the polymers or copolymers are proportionately higher when the catalyst employed contains little titanium. Furthermore, when the process is used for the gas phase manufacture of certain copolymers which are in the form of particles of a relatively sticky nature, the particles tend to form agglomerates. In particular, it can be very difficult using such catalysts, to manufacture linear polyethylenes of very low density in a fluidized-bed reactor without forming a large quantity of agglomerates. This phenomenon can require a stoppage of the polymerization reaction.

A new process for the gas phase manufacture of ethylene polymers or copolymers has now been found. This process makes use of a catalyst system exhibiting a high activity. Using such a catalyst system, the process overcomes, or at least mitigates, the above mentioned problems of the kwown processes . In particular, it-allows ethylene polymers or copolymers which have a very low content of catalyst residues to be manufactured with a high production efficiency. Furthermore, this process also makes possible the manufacture, in the gas phase, of ethylene copolymers of a relatively sticky nature, and more particularly linear polyethylenes of very low density, without forming agglomerates.

According to the present invention a process for the gas phase manufacture of ethylene polymers or ethylene copolymers containing, by weight, more than 80 % of ethylene and less than 20 % of one or more alpha-olefins containing from 3 to 12 carbon atoms is characterized in that

1) the process uses a Ziegler Natta type catalyst obtained by forming a magnesium dichloride support preactivated with an electron donor compound $D^1$ free from labile hydrogen to form a support comprising 80 to 99 mol % of magnesium dichloride and from 1 to 20 mol % of $D^1$, which support is in the form of spherical particles which have a mass-average diameter of 5-100 microns and a particle size distribution such that the ratio of the mass-average diameter Dn to the number average diameter Dn is lower than 2, and contacting the support successively with

(a) at least one electron donor compound $D^2$, containing labile hydrogen,
(b) an electron donor compound $D^3$ which is an aromatic acid ester,
(c) titanium tetrachloride, and then removing the excess unimpregnated titanium tetrachloride by at least one washing operation, and
(d) with titanium tetrachloride

2) the process comprises

(a) in a first stage, prepolymerizing the catalyst by bringing the said catalyst into contact with (i) at least one alpha-olefin containing from 2 to 12 carbon atoms and (ii) a cocatalyst (A) consisting of at least one organometallic compound of a metal belonging to group II or III of the Periodic Classification of the elements and,
(b) in a second stage, carrying out a gas phase polymerization reaction in a fluidised bed reactor by bringing the prepolymer into contact with ethylene or with a mixture comprising ethylene and at least one alpha-olefin containing from 3 to 12 carbon atoms, in such a proportion that the ethylene represents more than 80 % of the total volume of the olefins to be polymerized.

According to the present invention it is essential to prepare a prepolymer in a first stage with the aid of a catalyst system consisting of a catalyst and of a cocatalyst (A). The catalyst contains a special support based on magnesium dichloride, which enables the catalyst to have a high titanium content and an extremely high activity in ethylene polym-

EP 0 469 858 B1

erization or copolymerization. This special support is preactivated by an organic electron-donor compound, $D^1$, which can be present in the magnesium dichloride in a relatively large quantity. The organic electron-donor compound $D^1$ is known as such or as a Lewis base, having especially a relatively low complexing capacity towards magnesium dichloride. The compound $D^1$ is advantageously chosen from mild complexing agents, such as ethers, thioethers, amines, amides, sulphones, sulphoxides and phosphines. It cannot be chosen from agents capable of reacting with one of the products employed for preparing the support or the catalyst. In particular, the compound $D^1$ cannot be chosen from electron-donor compounds containing labile hydrogen, such as water, alcohols or phenols, or from aromatic acid esters. The organic electron-donor compound $D^1$ is preferably an ether.

The composition of the preactivated support comprises from 80 to 99 mol% of magnesium dichloride and from 1 to 20 mol% of the compound $D^1$. However, in order to obtain a catalyst of high activity and exhibiting a high titanium content, it advantageously comprises from 80 to 95 mol% of magnesium dichloride and from 5 to 20 mol% of the compound $D^1$. It has been found that the catalysts are most highly active when the preactivated support is in the form of a homogeneous composition comprising magnesium dichloride and the compound $D^1$, that is to say a composition in which the compound $D^1$ is distributed uniformly throughout the magnesium dichloride particle, in particular from the core to the periphery of the latter. As a result, in order to obtain such a preactivated support, it is recommended to prepare it according to methods making use of precipitation reactions and not merely by operations of bringing into contact, such as those carried out by milling.

It has been found, furthermore, that the preactivated support gives catalysts with high performance and a high titanium content, which is capable especially of withstanding the enormous growth stresses during the polymerization when it is in the form of an essentially amorphous structure, that is to say a structure where the crystalline forms of magnesium dichloride which are determined with the aid of an X-ray diffraction analysis have for the most part, or even completely, disappeared.

The preactivated support consists of spherical particles which have a mass-average diameter of 5 to 100 microns, preferably from 20 to 50 microns. The particles have a very narrow particle size distribution such that the ratio Dm/Dn of the mass-average diameter Dm to the number-average diameter Dn is lower than 2. More particularly, the particle size distribution of these particles can be extremely narrow, such that; (i) the ratio Dm/Dn is from 1.1 to 1.5:(ii) there are no, or few particles with a diameter greater than 1.5 x Dm or smaller than 0.6 x Dm ; and (iii) the particle size distribution is such that more than 90 % by weight of the particles in the same batch are included within the range Dm ± 10 %.

The specific surface of the particles of the preactivated support may be from 20 to 100 m2/g (BET), preferably from 30 to 60 m2/g (BET) and the relative density of these particles can range approximately from 1.2 to 2.1.

The preactivated support employed in the present invention may especially be prepared by reacting a dialkylmagnesium compound with an organic chlorine compound, in the presence of the organic electron-donor compound $D^1$. The dialkylmagnesium compound chosen may be a product of formula $R^1MgR^2$ in which $R^1$ and $R^2$ are identical or different alkyl radicals containing from 2 to 12 carbon atoms. One of the important properties of this dialkylmagnesium compound is that it is soluble as such in the hydrocarbon medium in which the preparation of the support will be carried out. The organic chlorine compound chosen is an alkyl chloride of formula $R^3Cl$ in which $R^3$ is a secondary or, preferably, tertiary alkyl radical containing from 3 to 12 carbon atoms. The organic electron-donor compound $D^1$ employed is preferably an ether of formula $R^4OR^5$ in which $R^4$ and $R^5$ are identical or different alkyl radicals containing from 1 to 12 carbon atoms.

In addition, the various reactants used for the preparation of the preactivated support must be employed in the following conditions:

- the molar ratio $R^3Cl/R^1MgR^2$ is from 1.5 to 2.5, preferably from 1.95 to 2.2,
- the molar ratio $D^1/R^1MgR^2$ is from 0.1 to 1.2, preferably from 0.3 to 0.8.

The reaction between $R^1MgR^2$ and $R^3Cl$ in the presence of the organic electron-donor compound $D^1$ is a precipitation which takes place with stirring in a liquid hydrocarbon. A person skilled in the art knows that, in this case, physical factors such as the viscosity of the medium, the method and the rate of stirring and the conditions for introducing the reactants can, everything else being equal, play an important part in the shape, the structure, the size and the particle size distribution of the precipitated particles. However, to obtain the preactivated support employed in the present invention, especially having an essentially amorphous structure, it is recommended to carry out the precipitation reaction at a relatively low temperature ranging from 10 to 80°C, preferably from 10 to 50°C and more particularly from 15 to 35°C. Furthermore, it is recommended that the precipitation reaction should take place extremely slowly, over a period of at least 2 hours, preferably a period ranging from 10 to 24 hours, so as to permit a suitable organization of the solid product formed, in particular the insertion of a large quantity of the compound $D^1$ and its uniform dispersion in the precipitated solid.

The actual preparation of the catalyst from the preactivated support described above comprises the following four successive stages :

(a) treating the preactivated support with at least one electron-donor compound, $D^2$, containing labile hydrogen,

3

(b) treating the support obtained above with at least one internal electron-donor compound $D^3$ which is an ester of an aromatic acid,

(c) impregnating the support thus treated with titanium tetrachloride, preferably in a molar quantity which is in excess relative to magnesium dichloride, and in then removing the excess unimpregnated titanium tetrachloride by at least one washing operation with the aid of a liquid hydrocarbon, and

(d) subjecting the support thus impregnated to an activation treatment with titanium tetrachloride, and, preferably, then washing the support thus treated with the aid of a liquid hydrocarbon.

More particularly, in stage (a) the preactivated support is treated with an electron-donor compound containing labile hydrogen, $D^2$, in order to obtain a support capable of subsequently fixing a relatively large quantity of titanium tetrachloride. In fact this treatment consists in carrying out an exchange between the organic electron-donor compound $D^1$ and the electron-donor compound containing labile hydrogen, $D^2$, within the preactivated support, in such conditions as to make this exchange practically total without, however, modifying the structure of the support. In particular, the compound $D^2$ has a complexing capacity towards magnesium dichloride which may be higher than that of the compound $D^1$.

The electron-donor compound containing labile hydrogen, $D^2$, is advantageously chosen from water, alcohols and phenols. An alcohol containing from 1 to 12 carbon atoms is preferably employed. More particularly, the compound $D^2$ is chosen from ethanol, propanol, n-butanol, n-pentanol and n-hexanol.

This treatment is advantageously carried out without it being possible to observe substantial crystallization of the support or any disintegration of the particles. In particular it is carried out by bringing the preactivated support into contact with the compound $D^2$, employed in a quantity of between 0.2 and 1.2 moles, preferably between 0.5 and 1.0 mole per mole of magnesium dichloride. Moreover, it is particularly recommended that the contact should be brought about at a temperature of 0°C to 50°C, preferably of 10°C to 35°C, to enable the exchange to take place without appreciable modification of the initial preactivated support. Furthermore, it is advantageous to bring about this contact with stirring in a liquid hydrocarbon such as n-hexane. In practice this contact can be brought about in various possible ways, for example by adding the compound $D^2$ to the suspension of the preactivated support, kept stirred in a liquid hydrocarbon. It is generally observed that all the compound $D^2$ used in this treatment is fixed in the support and that no substantial change is detected in the amorphous structure and in the morphology of the support. The support thus treated with the compound $D^2$ can be washed one or more times with the aid of a liquid hydrocarbon such as n-hexane, before moving on to the next stage.

In stage (b) the electron-donor compound $D^3$ is an aromatic acid ester which is advantageously chosen from ethyl benzoate, methyl para-toluate and dibutyl or diisobutyl phthalate. The treatment with the aromatic acid ester is carried out under such conditions as not to modify substantially the structure and the morphology of the support. In particular, it is carried out by bringing the support into contact with the aromatic acid ester in a quantity of between 0.1 and 1 mole, preferably between 0.2 and 0.8 mole per mole of magnesium dichloride. It is recommended, moreover, to bring this contact about at a temperature of 10°C to 60°C, preferably of 20°C to 50°C, in order not to modify appreciably the morphology of the support. It is advantageous to bring this contact about with stirring in a liquid hydrocarbon such as n-hexane. In practice, the contact may be brought about in various possible ways, in particular by adding the aromatic acid ester to the suspension of the support, kept stirred in a liquid hydrocarbon. If appropriate, the support thus treated may be washed one or more times with the aid of a liquid hydrocarbon such as n-hexane before moving on to the next stage.

In stage (c) the support treated with the aromatic acid ester is impregnated with titanium tetrachloride, which may be employed alone or in solution in a liquid hydrocarbon such as n-hexane. Typically impregnation is carried out by bringing the support into contact with titanium tetrachloride in a quantity of between 2 and 20 moles, preferably between 5 and 15 moles per mole of magnesium dichloride. In addition, it is recommended that the impregnation should be carried out at a temperature ranging from 5°C to 120°C, and preferably from 70°C to 100°C, in order that the support should retain a relatively amorphous structure which enables it to withstand the high growth stresses during the polymerization. It is advantageous, furthermore, to carry out this impregnation with stirring and in a liquid hydrocarbon such as n-hexane. In practice the impregnation may be carried out in various ways, in particular by adding titanium tetrachloride to the suspension of support, kept stirred in a liquid hydrocarbon. Thus impregnated, the support is washed one or more times with the aid of a liquid hydrocarbon such as n-hexane in order to remove the excess titanium tetrachloride not impregnated into the support, before moving on to the next stage.

In stage (d) the support prepared in stage (c) is subjected to an activation treatment with titanium tetrachloride. This treatment consists in bringing the titanium-impregnated solid into contact with titanium tetrachloride, employed alone or in solution in a liquid hydrocarbon such as n-hexane. The quantity of titanium tetrachloride used is from 2 to 20 moles, preferably from 5 to 15 moles per mole of magnesium dichloride. It is recommended, moreover, to bring about the contact at a temperature ranging from 20 to 120°C, and preferably from 70 to 120°C. It is advantageous to carry out the activation stage with stirring, in a liquid hydrocarbon such as n-hexane. In practice, the contact may be brought about in various ways, in particular by adding titanium tetrachloride to the suspension of titanium-impregnated solid in a liquid hydrocarbon and by keeping the mixture thus obtained stirred for a period ranging from 0.5 to 10 hours, preferably from 1 to 4 hours.

4

Thus treated, the solid is advantageously washed one or more times with the aid of a liquid hydrocarbon such as n-hexane. The activation treatment may consist of one or more contacting operations of this type. Thus treated, the support may contain from 4 to 10 mol% of titanium per mole of magnesium. The obtained catalyst is similar to the catalyst described in EP-A-336 545.

According to the invention the catalyst system used for the preparation of the prepolymer comprises a cocatalyst (A) in addition to the catalyst described above. The cocatalyst (A) is chosen from organometallic compounds of a metal belonging to group II or III of the Periodic Classification of the elements, such as organoaluminium, organomagnesium or organozinc compounds. Among the organoaluminium compounds there may be employed one or more organoaluminium compounds of general formula $AlR_3$ in which R is an alkyl radical containing from 1 to 8 carbon atoms, like, for example, triethylaluminium, triisobutylaluminium, tri-n-hexylaluminium and tri-n-octylaluminium.

The relative molar quantities of the cocatalyst (A) in relation to the titanium present in the catalyst are such that the molar ratio between the metal of the cocatalyst (A) and the titanium of the catalyst may vary from 1 to 10 and preferably from 2 to 5. In fact, it has been noted that when this ratio is lower the activity of the catalyst system weakens.

The catalyst system employed during the first stage can optionally comprise an external electron-donor compound $D^4$ which may be chosen from aromatic acid esters and organic silicon compounds, such as silane derivatives. In particular, it may be ethyl benzoate, methyl para-toluate or phenyltriethoxysilane. The molar ratio between the external electron-donor compound $D^4$ and the cocatalyst (A) is at least 0.1 and not more than 0.8, preferably close to 0.3. An excessively large quantity of the compound $D^4$ weakens the activity of the catalyst system. It is therefore preferred that the catalyst system is completely free from external electron-donor compound, in particular when an essentially ethylene-based prepolymer is being prepared.

According to the invention, during the first stage of the process a prepolymer is prepared by polymerization of at least one alpha-olefin containing from 2 to 12 carbon atoms. This alpha-olefin may be chosen from ethylene, propylene, 1-butene, 1-hexene, 4-methyl-1-pentene, 1-octene and 1-dodecene. However, it is advantageous to prepare a prepolymer by polymerization of ethylene or of propylene alone or of a mixture of alpha-olefins containing at least 80 mol%, preferably 90 % of ethylene or of propylene. The prepolymerization stage may be carried out in one or more consecutive stages and is generally stopped when the prepolymer contains from 0.1 to 500 g, preferably from 10 g to 400 g, and more particularly from 150 g to 300 g of prepolymer per millimole of titanium.

The prepolymer may be prepared according to known means . For example it may be prepared in suspension in a saturated liquid hydrocarbon such as n-hexane or n-heptane, at a temperature ranging from 20°C to 80°C, preferably from 30°C to 65°C. Furthermore, the prepolymer may be prepared in gaseous phase in a reactor with a mechanically stirred and/or fluidized bed, at a temperature ranging from 10°C to 60°C, preferably from 25°C to 40°C, and at a total pressure ranging from 0.1 to 5 MPa. If it is desired to prepare a prepolymer using propylene it may be prepared in suspension in liquid propylene at a temperature ranging from 0°C to 80°C, preferably from 10°C to 30°C. Whatever the method of preparing the prepolymer, in order to control the quantity of prepolymer which is prepared it is desirable to carry out the prepolymerization in such conditions that the rate of prepolymerization is relatively slow. This rate is generally lower than or equal to 150 g of olefin per hour and per millimole of titanium of the catalyst. This rate can be modified especially using the prepolymerization temperature or the relative quantities of catalyst and of cocatalyst (A).

The main effects of the prepolymerization stage carried out according to the present invention are the maintenance of the spherical shape of the preactivated support, without modifying its particle size distribution, and the preparation of a prepolymer exhibiting advantageous and improved properties with a view to the subsequent stage of gas phase polymerization. The advantageous and improved properties of the prepolymer concern especially an excellent mechanical strength and a remarkable resistance to abrasion and to bursting of the particles subjected to the enormous growth stresses during the subsequent polymerization stage. Furthermore, a surprising advantage of the present invention is that it is possible to prepare a prepolymer which is in the form of a powder consisting of non-adhesive particles. This prepolymer powder has very good flow properties and is consequently easily capable of being handled in the subsequent polymerization stage. Furthermore, when the prepolymer is prepared in suspension in a liquid, it is found that the fraction of prepolymer which is soluble in the liquid is very small. This offers the enormous advantage of making it possible to avoid an operation of extraction and of washing of the prepolymer, and thus of making it possible to employ the prepolymer in suspension directly in the second stage of the process.

During the second stage of the process a gas phase polymerization reaction is carried out by bringing the prepolymer prepared previously into contact with ethylene or with a gaseous mixture containing ethylene and at least one alpha-olefin containing from 3 to 12 carbon atoms, which may be chosen from propylene, 1-butene, 4-methyl-1-pentene, 1-hexene, 1-octene, 1-decene and 1-dodecene. In most cases ethylene alone or a mixture containing ethylene and 1-butene or 4-methyl-1-pentene is polymerized. The olefins to be polymerized which are present in the gaseous mixture are in such a proportion that ethylene represents at least 80 % of the volume of these olefins. To manufacture linear very low density or linear low density polyethylenes, the proportion of ethylene relative to the volume of the olefins may be between 80 and 90 % and between 90 and 96 % respectively. The ethylene or the gaseous mixture may contain an inert gas such as nitrogen, ethane, propane or isopentane, and a chain-limiter agent such as hydrogen. The actual gas phase polymerization reaction is carried out in a fluidized-bed reactor in which the polymer or copolymer particles being formed are kept in the fluidized state with the aid of an upward gas stream propelled by means of a compressor at a velocity of 2 to 10 times, preferably from 5 to 8 times, the minimum fluidization velocity. In order to promote efficient removal of the heat of the polymerization reaction, and to avoid the formation of agglomerates, this fluidization velocity is chosen to be as high as possible but it is limited by the constraints of the apparatus such as the maximum capacity of the compressor and the size of the reactor. Generally, the fluidization velocity is between 15 and 80 cm/s, preferably higher than 40 cm/s. The gas stream leaves the fluidized-bed reactor and passes through a cooling system intended to remove the heat produced during the polymerization or copolymerization reaction, before being recycled into the fluidized-bed reactor by means of the compressor. The mean pressure in the polymerization reactor may be close to atmospheric pressure, but is preferably higher, in order to increase the polymerization rate. It may be between 0.1 and 5 MPa, preferably between 0.2 and 2 MPa. The reaction temperature is lower than the softening temperature of the product which is manufactured and is generally between 0 and 120°C, preferably between 50 and 90°C. The polymerization rate may be modified using the reaction temperature and/or using the quantity of prepolymer employed.

In practice, to carry out the gas phase polymerization reaction, the prepolymer is introduced into the polymerization reactor in order to be brought into contact with ethylene or with the gaseous mixture containing the olefins to be polymerized. The prepolymer is introduced into the reactor in the form of a dry powder or in suspension in a liquid hydrocarbon. This introduction of prepolymer may be carried out continuously or intermittently. The prepolymer used may be activated with the aid of a cocatalyst (B) which is identical with or different from the cocatalyst (A). This cocatalyst (B) may be an organoaluminium compound such as a trialkylaluminium, an alkylaluminium halide or a mixture of the two. In particular, it may be chosen from triethylaluminium, tri-n-propylaluminium or triisobutylaluminium. It may be introduced into the polymerization reactor according to any known methods, in particular alone or diluted in one or more alpha-olefins or in a saturated aliphatic hydrocarbon. This cocatalyst (B) may be introduced into the polymerization reactor in the liquid state or completely converted into the gaseous state, especially when it is highly volatile. The activation of the prepolymer by the cocatalyst (B) may be carried out before the introduction of the prepolymer into the polymerization reactor and in particular in the conduit for introducing the prepolymer.

The quantity of cocatalyst (B) is such that the molar ratio of the quantity of metal of the cocatalyst (B) to the quantity of titanium of the prepolymer is between 0.5 and 100, preferably between 1 and 20.

An electron-donor compound $D^5$ identical with or different from the compound $D^3$ or $D^4$ may be employed in addition to the cocatalyst (B). This compound $D^5$ may be advantageously added to the prepolymer before it is introduced into the polymerization or copolymerization reactor. It may also be introduced into the reactor by itself or mixed with the cocatalyst (B). It is employed in a quantity such that the molar ratio between the cocatalyst (B) and the compound $D^5$ is between 5 and 100.

Using the process of the present invention it is possible to manufacture in satisfactory industrial conditions a large number of ethylene polymers and copolymers which have a reproducible quality. For example, it is possible to manufacture so-called high density polyethylenes, whose relative density is higher than 0.940, among which ethylene homopolymers and copolymers of ethylene and of alpha-olefins containing from 3 to 12 carbon atoms figure prominently. It is also possible to manufacture linear low density polyethylenes which have a relative density ranging from 0.910 to 0.940, consisting of copolymers of ethylene and of one or more alpha-olefins containing from 3 to 12 carbon atoms and which have a weight content of ethylene-derived units ranging from 90 to 96 %.

Very advantageously, this process makes it possible to manufacture linear very low density polyethylenes which have a specific density ranging from 0.880 to 0.910, consisting of copolymers of ethylene and of one or more alpha-olefins containing from 3 to 12 carbon atoms, with a weight content of ethylene-derived units higher than 80 % and lower than 90 %. These very low density polyethylenes can have a melt index (MI2), measured at 190°C under a 2-kg load, ranging from 0.1 to 10 g/10 minutes. These very low density polyethylenes tend to be rather sticky and as discussed above problems have been experienced using known techniques for making such polymers in gas phase fluidized bed reactors. The present invention enables these problems to be overcome or at least mitigated

The very low density polymers produced by the process according to the present invention can be used in any of the known applications for such polymers. However, the polymers according to the present invention have been found to be particularly useful for wire and cable applications. The polymers can be used alone or in a mixture with other polymers. For medium or high voltage cable insulation the polymers would generally be crosslinked, e.g. using a peroxide crosslinking agent.

By virtue of the process of the invention the ethylene polymers or copolymers are manufactured with a particularly high catalyst efficiency, as a result they have extremely low titanium contents, especially lower than 5 ppm, together with low chlorine contents, especially lower than 100 ppm.

It is advantageously found, furthermore, that the development of each polymer or copolymer particle during the polymerization reaction is uniform, with the result that polymer or copolymer powders consisting of spherical particles are obtained. The latter are characterized by a mass-average diameter Dm ranging from 250 to 1000 microns, and by a very narrow particle size distribution, defined as a ratio between Dm and the number-average diameter Dn, lower than 3, preferably lower than 2. This spherical shape of the particles is particularly advantageous because it makes it possible to manufacture ethylene polymers or copolymers and more particularly linear very low density polyethylenes which are in the form of a powder that has very good flow properties and which are free from agglomerates. This powder has a high apparent density, especially between 0.350 and 0.500 g/cm$^3$.

Determination of the flowability of a polymer or copolymer powder

The flowability of a polymer or copolymer powder is determined with the aid of a hopper with a volume of 0.286 litres, in the shape of a conical frustum of revolution, with a vertical axis and with an apex angle pointing downwards and having a small-base diameter of 10 mm, a large-base diameter of 93 mm and a height of 113 mm.

The hopper orifice is shut off with a glass slide. The polymer or copolymer powder, which has been aerated and decompacted beforehand, is poured loosely into the hopper through the upper orifice. When the hopper is filled, the powder is skimmed level with the upper orifice of the hopper by sweeping off horizontally the excess quantity of poured powder. The glass slide shutting off the lower orifice is then removed and it is ascertained whether free flow of the powder takes place or not. The flowability of a powder is determined as the time needed to empty the hopper completely. According to this method, a powder is considered to have good flow properties when the hopper empties in less than 25 seconds, and as having poor flow properties if the hopper empties in more than 35 seconds.

Method of determining the mass-average (Dm) and number-average (Dn) particle diameters.

According to the invention, the mass-average (Dm) and number-average (Dn) diameters of the support or catalyst particles are measured on the basis of microscopic observations by means of the Optomax image analyser (Micro-Measurements Ltd, Great Britain). The principle of the measurement consists in obtaining, from the experimental study of a particle population using optical microscopy, a frequency table which gives the number ($n_i$) of particles belonging to each class (i) of diameters, each class (i) being characterized by an intermediate diameter ($d_i$) included within the limits of the said class. According to the approved French standard NF X 11-630 of June 1981, Dm and Dn are given by the following formulae:

$$\text{mass-average diameter : } Dm = \frac{\Sigma\, n_i(d_i)^3 d_i}{\Sigma\, n_i(d_i)^3}$$

$$\text{number-average diameter : } Dn = \frac{\Sigma\, n_i . d_i}{\Sigma\, n_i}$$

The ratio Dm/Dn characterizes the particle size distribution; it is sometimes called "particle size distribution width". The measurement using the Optomax image analyser is carried out by means of an inverted microscope which allows suspensions of particles of support or of catalyst to be examined with a magnification of between 16 and 200 times. A television camera picks up the images given by the inverted microscope and transmits them to a computer which analyses the images picks up the images given by the inverted microscope and transmits them to a computer which analyses the images received line by line and point by point on each line, with a view to determining the particle dimensions or diameters, and then classifying them.

The following examples illustrate the invention.

Example 1

Preparation of a preactivated support

10.2 litres of a mixture containing 10 moles of dibutylmagnesium in n-hexane, 6.45 litres of n-hexane and, lastly, 1 litre of diisoamyl ether are introduced in succession, at room temperature (25°C) during a first stage under nitrogen, into a 30-litre stainless steel reactor equipped with a stirring system rotating at the speed of 600 revolutions per minute and with a jacket. In a second stage, in which the speed of the stirring system is maintained at 600 revolutions per minute and the reactor temperature at 25°C, 2.4 l of tert-butyl chloride are added to the mixture thus obtained at a constant rate for 12 hours. At the end of this time the reaction mixture is maintained at 25°C for 3 hours. The precipitate obtained is washed with 15 litres of n-hexane. Washing of the precipitate is repeated 6 times. The solid product obtained constitutes the preactivated support (A) based on magnesium dichloride, containing 12 mol% of diisoamyl ether relative to magnesium chloride. When examined with a microscope, the preactivated support (A) is in the form of spherical particles which have a mass-average diameter of 21 microns and an extremely narrow particle size distribution such that the ratio Dm/Dn of the particles is equal to 1.4.

The specific surface of the preactivated support (A) is approximately 45 m2/g (BET). The structure of the magnesium dichloride in the preactivated support is totally amorphous.

Example 2

Preparation of a catalyst

A suspension of the preactivated support (A) prepared previously in Example 1, containing 4 moles of magnesium dichloride in 6 litres of n-hexane, is introduced under nitrogen atmosphere into a 30-litre stainless steel reactor equipped with a stirring system rotating at 350 revolutions per minute. To this suspension, which is kept stirred at room temperature (25°C), are added 18 litres of n-hexane and, slowly over 30 minutes, 0.365 litres of n-butanol. The suspension of activated support thus obtained is then kept stirred for 1 hour at 25°C. At the end of this time stirring is stopped, the activated support is allowed to settle, the supernatant liquid phase is removed and the activated support is resuspended with stirring in 6 litres of n-hexane.

In a second stage 10 litres of n-hexane are added to the last suspension of activated support, kept stirred at 25°C, followed slowly over 30 minutes by 0.46 litres of ethyl benzoate. The support suspension thus treated is kept stirred for 1 hour at 25°C. At the end of this time the stirring is stopped, the treated support is allowed to settle, the supernatant liquid phase is removed and the treated support is subjected to 3 successive washings using 20 litres of n-hexane at 25°C each time, each washing consisting in keeping the suspension stirred for 15 minutes, then allowing the treated support to settle for 20 minutes, removing the supernatant liquid phase and resuspending the treated support. The treated support is finally resuspended in 6 litres of n-hexane.

In a third stage 6 litres of titanium tetrachloride are added to the last suspension of treated support, kept stirred at 25°C. The suspension thus obtained is heated to 100°C and is kept stirred at this temperature for 2 hours. At the end of this time the support suspension impregnated in this way is cooled with stirring to 50°C, then the stirring is stopped, the impregnated support is allowed to settle, the supernatant liquid phase is removed and the impregnated support is subjected to 3 successive washings using 20 litres of n-hexane at 50°C each time and then 2 successive washings using 20 litres of n-hexane at 25°C each time. The impregnated support (B) is finally resuspended in 6 litres of n-hexane at 25°C. It consists of spherical particles containing 6 % of titanium atoms per magnesium atom.

In a fourth stage 9 litres of titanium tetrachloride are added to the last suspension of impregnated support (B) kept stirred at 25°C. The suspension thus obtained is heated to 100°C and is kept stirred at this temperature for 2 hours. At the end of this time the catalyst suspension thus obtained is cooled with stirring to 50°C, then the stirring is stopped, the catalyst is allowed to settle, the supernatant liquid phase is removed and the catalyst is subjected to 3 successive washings using 20 litres of n-hexane at 50°C each time and then 4 successive washings using 20 litres of n-hexane at 25°C each time.

The catalyst (C) is isolated and stored under nitrogen atmosphere. It contains 6.5 % of titanium atoms per magnesium atoms and consists of spherical particles which have a mass-average diameter $D_m$ of 21 microns and a particle size distribution such that the ratio $D_m/D_n$ of the particles is 1.4.

Example 3

A) Preparation of a propylene prepolymer in suspension in n-hexane

Into a 1-m³ stainless steel reactor equipped with a stirring device rotating at a speed of 140 revolutions per minute, kept under nitrogen pressure and at a temperature of 60°C, are introduced in succession 450 litres of n-hexane, 2.05 moles of tri-n-octylaluminium, a quantity of the catalyst (C) prepared in Example 2, containing 0.41 moles of titanium, and liquid propylene at a steady flow rate of 18 kg/hour. At the end of 4 hours and 20 minutes' reaction the reaction is stopped and the reactor is degassed. The prepolymer obtained is washed 3 times in succession with 300 litres of n-hexane. The contents of the reactor are then transferred into a drier in which n-hexane is evaporated off by means of a hot nitrogen stream. A dried prepolymer (D) is thus obtained, consisting of a nonadhesive powder which has the following characteristics:

- titanium content: 250 ppm
- Al/Ti ratio in the prepolymer (D): 2
- quantity of prepolymer obtained per millimole of titanium: 190 g
- apparent density: 0.390 g/cm³
- mass-average particle diameter: 110 microns.

B) Preparation of a linear very low density polyetylene

The operation is carried out in a fluidized-bed reactor consisting of a vertical cylinder which has a diameter of 0.45 m and a height of 7 m and is equipped in its lower part with a fluidization grid and supports a disengagement chamber. This reactor is equipped with an external gas recycle conduit connecting the top of the disengagement chamber to the reactor's lower part, situated under the fluidization grid and equipped with a gas circulation compressor and means for heat transfer. Feed conduits for ethylene, 1-butene, hydrogen and nitrogen, which represent the main constituents of the reaction gas mixture passing through the fluidized bed, emerge, more particularly, into the recycle conduit.

The reactor contains a fluidized bed maintained over a constant height h of 1.80 m above the fluidization grid, which consists of 70 kg of a linear very low density polyethylene powder which is being formed. This reactor is heated to 60°C and is fed with prepolymer (D) at a rate of 0.25 kg/h.

The reaction gas mixture is at a total pressure of 1.6 MPa and rises in the fluidized bed with an upward fluidization velocity of 0.55 m/s. It contains 30 % of ethylene, 11 % of 1-butene, 12 % of hydrogen and 47 % of nitrogen by volume.

Under these conditions 15 kg/hour of a linear very low density polyethylene are manufactured, in the form of a powder which has good flow properties and which has the following characteristics:

- specific density: 0.900
- weight content of units derived from 1-butene: 17.5 %
- melt index MI2 measured at 190°C under a 2-kg load: 1 g/10 minutes
- apparent density: 0.390 g/cm$^3$
- titanium content: 4 ppm
- mass-average particle diameter Dm: 430 microns
- Dm/Dn ratio: 1.6
- flowability: 20 seconds.

Example 4

A) Preparation of a propylene prepolymer in suspension in n-hexane

Into a 1-m$^3$ stainless steel reactor equipped with a stirring device rotating at a speed of 140 revolutions per minute, kept under nitrogen pressure and at a temperature of 60°C, are introduced in succession 450 litres of n-hexane, 1.09 moles of triethylaluminium, 0.545 moles of diethylaluminium chloride, a quantity of catalyst (C) prepared in Example 2, containing 0.41 moles of titanium, and liquid propylene at a steady flow rate of 18 kg/hour. At the end of 4 hours and 20 minutes the introduction of propylene is stopped, the reactor is degassed and the prepolymer obtained is washed 3 times in succession with 300 litres of n-hexane. The contents of the reactor are then transferred into a drier in which n-hexane is evaporated off by means of a hot nitrogen stream.

- Under these conditions a prepolymer (E) consisting of a nonadhesive powder is obtained, which has the following characteristics:

- titanium content: 260 ppm
- Al/Ti ratio in the dried prepolymer (E): 1.2
- quantity of prepolymer obtained per millimole of titanium: 185 g
- apparent density: 0.460 g/cm$^3$.

B) Preparation of a linear low density polyethylene

The operation is carried out in a fluidized-bed reactor identical with that described in Example 3-B. This reactor contains a fluidized bed maintained over a constant height h of 1.8 m above the fluidization grid, this bed consisting of 70 kg of a linear low density polyethylene powder which is being formed. This reactor is heated to 80°C and is fed with prepolymer (E) at a rate of 0.25 kg/h and with a solution containing 100 millimoles of triethylaluminium per litre of n-hexane at a flow rate of 50 ml/hour.

The reaction gas mixture is at a total pressure of 1.6 MPa and rises in the fluidized bed at an upward fluidization velocity of 0.52 m/s. It contains 30 % of ethylene, 4.5 % of 1-butene, 12 % of hydrogen and 53.5 % of nitrogen by volume.

Under these conditions 20 kg/hour of a linear low density polyethylene are manufactured, in the form of a powder which has very good flow properties and which has the following characteristics:

- specific density: 0.920
- weight content of units derived from 1-butene: 7.5 %

- melt index MI2 measured at 190°C under a 2-kg load: 0.6 g/10 minutes
- apparent density: 0.480 g/cm$^3$
- titanium content: 3 ppm
- mass-average particle diameter Dm: 480 microns.
- Dm/Dn ratio: 1.8

Example 5

A) Preparation of a propylene prepolymer in suspension in n-hexane

The operation is carried out exactly as in Example 4-A.

B) Preparation of a linear low density polyethylene

The operation is carried out in a fluidized-bed reactor identical with that described in Example 3-B, except for the fact that the 1-butene feed conduit is replaced with a 4-methyl-1-pentene feed conduit. This reactor contains a fluidized bed maintained over a constant height h of 1.8 m above the fluidization grid, which consists of 70 kg of a linear low density polyethylene powder which is being formed. This reactor is heated to 80°C and is fed with prepolymer (E) at a rate of 0.25 kg/h and with a solution containing 100 millimoles of triethylaluminium per litre of n-hexane at a flow rate of 50 ml/hour.

The reaction gas mixture is at a total pressure of 1.6 MPa and rises in the fluidized bed at an upward fluidization velocity of 0.50 m/s. It contains 30 % of ethylene, 3 % of 4-methyl-1-pentene, 12 % of hydrogen and 55 % of nitrogen by volume.

Under these conditions 15 kg/h of a linear low density polyethylene are manufactured, in the form of a powder which has good flow properties and which has the following characteristics:

- specific density: 0.919
- weight content of units derived from 4-methyl-1
- pentene: 9.5 %
- melt index MI2 measured at 190°C under a 2-kg load: 1 g/10 minutes
- apparent density: 0.450 g/cm$^3$
- mass-average particle diameter Dm: 480 microns.
- Dm/Dn ratio: 1.8.

**Claims**

1. A process for the gas phase manufacture of ethylene polymers or ethylene copolymers containing, by weight, more than 80% of ethylene and less than 20% of one or more alpha-olefins containing from 3 to 12 carbon atoms, characterized in that

   (1) The process uses a Ziegler Natta type catalyst obtained by forming a magnesium dichloride support preactivated with an organic electron donor compound D$^1$ free from labile hydrogen to form a support comprising 80 to 99mol% of magnesium dichloride and from 1 to 20mol% of D$^1$, which support is in the form of spherical particles which have a mass-average diameter of 5-100 microns and a particle size distribution such that the ratio of the mass-average diameter Dn to the number average diameter Dn is lower than 2, and contacting the support successively with

      (a) at least one electron donor compound D$^2$, containing labile hydrogen
      (b) an electron donor compound D$^3$ which is an aromatic acid ester
      (c) 2-20 moles titanium tetrachloride per mole of magnesium, and then removing the excess unimpregnated titanium tetrachloride by at least one washing operation, and
      (d) with 2-20 moles titanium tetrachloride per mole of magnesium,

   said catalyst having a titanium content of 4-10mol% per mole of magnesium
   (2) the process comprises

      (a) in a first stage, prepolymerizing the catalyst by bringing the said catalyst into contact with (i) at least one alpha-olefin containing from 2 to 12 carbon atoms and (ii) a cocatalyst (A) consisting of at least one organometallic compound of a metal belonging to group II or III of the Periodic Classification of the elements, the molar ratio of the metal in the cocatalyst to titanium in the catalyst being in the range 1-10 and,

(b) in a second stage, carrying out a gas phase polymerization reaction in a fluidised bed reactor by bringing the prepolymer into contact with ethylene or with a mixture comprising ethylene and at least one alpha-olefin containing from 3 to 12 carbon atoms, in such a proportion that the ethylene represents more than 80% of the total volume of the olefins to be polymerized.

2. A process according to Claim 1, characterized in that the organic electron-donor compound $D^1$ is chosen from ethers, sulphones, sulphoxides, phosphines, thioethers, amines and amides.

3. A process according to any one of claims 1 to 2, characterised in that the preactivated support comprises from 80 to 95mol% of magnesium dichloride and from 5 to 20mol% of the organic electron-donor compound $D^1$.

4. A process according to any one of claims 1 to 3, characterized in that the electron-donor compound containing labile hydrogen $D^2$ is chosen from water, alcohol and phenols.

5. A process according to any one of claims 1 to 4, characterized in that the prepolymer is obtained by polymerization of at least one alpha-olefin chosen from ethylene, propylene, 1-butene, 1-hexene, 4-methyl-1-pentene, 1-octene and 1-dodecene.

6. A process according to any one of claims 1 to 5, characterized in that the prepolymerization is carried out in suspension in a liquid saturated hydrocarbon at a temperature in the range from 20°C to 80°C or in gaseous phase at a temperature in the range from 10°C to 60°C, and at a pressure ranging from 0.1 to 5MPa.

7. A process according to any one of claims 1 to 6, characterized in that the polymerization is carried out by bringing the prepolymer into contact with a gas mixture containing ethylene and at least one chosen alpha-olefin, propylene, 1-butene, 1-hexene, 4-methyl-1-pentene, 1-octene and 1-dodecene.

8. A process according to any one of claims 1 to 7, characterized in that the fluidisation velocity in the fluidised bed reactor is higher than 40cm/s.

9. A process according to any one of claims 1 to 8, characterized in that the gas phase polymerization is carried out at a temperature in the range from 0 to 120°C and at a pressure in the range from 0.1 to 5MPa.

10. Linear very low density polyethylenes which have a relative density ranging from 0.880 to 0.910, consisting of copolymers of ethylene and of one or more alpha-olefins containing from 3 to 12 carbon atoms, which have a weight content of ethylene-derived units higher than 80% and lower than 90%, which have a titanium content lower than 5ppm and which are in the form of a powder which has an apparent density of between 0.350 and 0.500g/cm³ and which consists of spherical particles which have a mass-average diameter Dm ranging from 250 to 1000 microns and a ratio between Dm and the number-average diameter Dn lower than 3.

11. A process according to claim 1 for the gas phase manufacture of very low density polyethylenes containing by weight, more than 80% and lower than 90% of ethylene, and one or more alpha-olefins containing from 3 to 12 carbon atoms characterized in that

(1) the process uses a Ziegler Natta type catalyst obtained by forming a magnesium dichloride support preactivated with an organic electron donor compound $D^1$ free from labile hydrogen to form a support comprising 80 to 99mol% of magnesium dichloride and from 1 to 20mol% of $D^1$, which support is in the form of spherical particles which have a mass-average diameter of 5-100 microns and a particle size distribution such that the ratio of the mass-average diameter Dn to the number average diameter Dn is lower than 2, and contacting the support successively with

(a) at least one electron donor compound $D^2$, containing labile hydrogen
(b) an electron donor compound $D^3$ which is an aromatic acid ester
(c) titanium tetrachloride, and then removing the excess unimpregnated titanium tetrachloride by at least one washing operation, and
(d) with titanium tetrachloride

(2) the process comprises

(a) in a first stage, prepolymerizing the catalyst by bringing the said catalyst into contact with (i) at least one alpha-olefin containing from 2 to 12 carbon atoms and (ii) a cocatalyst (A) consisting of at least one organometallic compound of a metal belonging to group II or III of the Periodic Classification of the elements and,

(b) in a second stage carrying out a gas phase polymerization reaction, in a fluidised bed reactor by bringing the prepolymer into contact with a mixture comprising ethylene and at least one alpha-olefin containing from 3 to 12 carbon atoms, in such a proportion that the ethylene represents between 80 and 90% of the total volume of the olefins to be polymerized.

## Patentansprüche

1. Verfahren zur Herstellung von Ethylenpolymeren oder Ethylencopolymeren in der Gasphase, die auf das Gewicht bezogen mehr als 80% Ethylen und weniger als 20% eines oder mehrerer 3 bis 12 Kohlenstoffatome enthaltender $\alpha$-Olefine enthalten, dadurch gekennzeichnet, daß

    (1) das Verfahren einen Katalysator vom Ziegler-Natta-Typ verwendet, erhalten durch Herstellen eines Magnesiumdichlorid-Trägers, voraktiviert mit einer organischen Elektronendonorverbindung $D^1$, die keinen labilen Wasserstoff aufweist, unter Herstellen eines Trägers, der 80 bis 99 Mol% Magnesiumdichlorid und 1 bis 20 Mol% $D^1$ umfaßt, wobei der Träger in Form von kugelförmigen Teilchen vorliegt, die einen massemittleren Durchmesser von 5-100 µm und eine Teilchengrößenverteilung derart ausgelegt, daß das Verhältnis des massemittleren Durchmessers Dm zum zahlenmittleren Durchmesser Dn kleiner 2 ist, aufweisen und Versetzen des Trägers nacheinander mit

    (a) mindestens einer Elektronendonorverbindung $D^2$, die labilen Wasserstoff enthält
    (b) einer Elektronendonorverbindung $D^3$, die ein aromatischer Säureester ist
    (c) 2-20 Mol Titantetrachlorid pro Mol Magnesium und anschließend Entfernen des Überschusses nichtimprägnierten Titantetrachlorids durch mindestens einen Waschvorgang und
    (d) mit 2-20 Mol Titantetrachlorid pro Mol Magnesiun,

    wobei der Katalysator einen Titangehalt von 4-10 Mol% pro Mol Magnesium aufweist;
    (2) das Verfahren unfaßt

    (a) in einer ersten Stufe, Vorpolymerisieren des Katalysators durch Inkontaktbringen des Katalysators mit (i) mindestens einem 2 bis 12 Kohlenstoffatome enthaltenden $\alpha$-Olefin und (ii) einen Cokatalysator (A), der aus mindestens einer Organometallverbindung eines Metalls, zugehörig zur Gruppe II oder III des Periodensystems der Elemente, besteht, wobei das Molverhältnis des Metalls in dem Cokatalysator zu Titan in dem Katalysator im Bereich von 1-10 liegt und
    (b) in einer zweiten Stufe, Ausführen einer Gasphasenpolymerisation in einem Wirbelschichtreaktor durch Inkontaktbringen des Vorpolymers mit Ethylen oder mit einem Gemisch, das Ethylen und mindestens ein 3 bis 12 Kohlenstoffatome enthaltendes $\alpha$-Olefin umfaßt, in einem derartigen Verhältnis, daß das Ethylen mehr als 80% des Gesamtvolumens der zu polymerisierenden Olefine wiedergibt.

2. Verfahren nach Anspruch 1, dadurch gekennzeichnet, daß die organische Elektronendonorverbindung $D^1$ aus Ethern, Sulfonen, Sulfoxiden, Phosphinen, Thioethern, Aminen und Amiden ausgewählt ist.

3. Verfahren nach einem der Ansprüche 1 bis 2, dadurch gekennzeichnet, daß der voraktivierte Träger 80 bis 95 Mol% Magnesiumdichlorid und 5 bis 20 Mol% der organischen Elektronendonorverbindung $D^1$ umfaßt.

4. Verfahren nach einem der Ansprüche 1 bis 3, dadurch gekennzeichnet daß die labilen Wasserstoff enthaltende Elektronendonorverbindung $D^2$ ausgewählt ist aus Wasser, Alkohol und Phenolen.

5. Verfahren nach einem der Ansprüche 1 bis 4, dadurch gekennzeichnet, daß das Vorpolymer durch Polymerisation mindestens eines $\alpha$-Olefins, ausgewählt aus Ethylen, Propylen, 1-Buten, 1-Hexen, 4-Methyl-1-penten, 1-Octen und 1-Dodecen, erhalten wird.

6. Verfahren nach einem der Ansprüche 1 bis 5, dadurch gekennzeichnet, daß die Vorpolymerisation in Suspension in einem flüssigen gesättigten Kohlenwasserstoff bei einer Temperatur im Bereich von 20°C bis 80°C oder in der Gasphase bei einer Temperatur im Bereich von 10°C bis 60°C und bei einem Druck im Bereich von 0,1 bis 5 MPa ausgeführt wird.

**7.** Verfahren nach einem der Ansprüche 1 bis 6, dadurch gekennzeichnet, daß die Polymerisation durch Inkontaktbringen des Vorpolymers mit einem Gasgemisch, das Ethylen enthält, und mindestens einem ausgewählten $\alpha$-Olefin, Propylen, 1-Buten, 1-Hexen, 4-Methyl-1-penten, 1-Octen und 1-Dodecen, ausgeführt wird.

**8.** Verfahren nach einen der Ansprüche 1 bis 7, dadurch gekennzeichnet, daß die Fluidisationsgeschwindigkeit in dem Wirbelschichtreaktor höher als 40 cm/s ist.

**9.** Verfahren nach einen der Ansprüche 1 bis 8, dadurch gekennzeichnet, daß die Gasphasenpolymerisation bei einer Temperatur im Bereich von 0 bis 120°C und bei einem Druck im Bereich von 0,1 bis 5 MPa ausgeführt wird.

**10.** Lineare Polyethylene mit sehr geringer Dichte, die eine relative Dichte im Bereich von 0,880 bis 0,910 aufweisen, aus Copolymeren von Ethylen und ein oder mehreren 3 bis 12 Kohlenstoffatome enthaltenden $\alpha$-Olefinen bestehen, die einen Gewichtsanteil von Ethylen-abgeleiteten Einheiten von mehr als 80% und weniger als 90% aufweisen, die einen Titananteil von weniger als 5 ppm aufweisen und die in Form eines Pulvers vorliegen, das eine Schüttdichte zwischen 0,350 und 0,500 g/cm$^3$ aufweist und das aus sphärischen Teilchen mit einem massemittleren Durchmesser Dm im Bereich von 250 bis 1000 $\mu$m und einem Verhältnis zwischen Dm und dem zahlenmittleren Durchmesser Dn von weniger als 3 besteht.

**11.** Verfahren nach Anspruch 1 zur Herstellung von Polyethylenen mit sehr geringer Dichte, die auf das Gewicht bezogen mehr als 80% und weniger als 90% Ethylen enthalten, und ein oder mehrere $\alpha$-Olefine, die 3 bis 12 Kohlenstoffatome enthalten, in der Gasphase, dadurch gekennzeichnet, daß

(1) das Verfahren einen Katalysator vom Ziegler-Natta-Typ verwendet, erhalten durch Herstellen eines Magnesiumdichlorid-Trägers, voraktiviert mit einer organischen Elektronendonorverbindung D$^1$, die keinen labilen Wasserstoff aufweist, unter Herstellen eines Trägers, der 80 bis 99 Mol% Magnesiumdichlorid und 1 bis 20 Mol% D$^1$ umfaßt, wobei der Träger in Form von kugelförmigen Teilchen vorliegt, die einen massemittleren Durchmesser von 5-100 $\mu$m und eine Teilchengrößenverteilung derart ausgelegt, daß das Verhältnis des massemittleren Durchmessers Dm zum zahlenmittleren Durchmesser Dn kleiner 2 ist, aufweisen und Versetzen des Trägers nacheinander mit

(a) mindestens einer Elektronendonorverbindung D$^2$, die labilen Wasserstoff enthält
(b) einer Elektronendonorverbindung D$^3$, die ein aromatischer Säureester ist
(c) Titantetrachlorid und dann Entfernen des Überschusses an nichtimprägniertem Titantetrachlorid durch mindestens einen Waschvorgang und
(d) mit Titantetrachlorid;

(2) das Verfahren umfaßt

(a) in einer ersten Stufe Vorpolymerisieren des Katalysators durch Inkontaktbringen des Katalysators mit (i) mindestens einem 2 bis 12 Kohlenstoffatome enthaltenden $\alpha$-Olefin und (ii) einem Cokatalysator (A), bestehend aus mindestens einer Organometallverbindung eines Metalls, zugehörig zur Gruppe II oder III des Periodensystems der Elemente, und
(b) in einer zweiten Stufe Ausführen einer Gasphasenpolymerisationsreaktion in einem Wirbelschichtreaktor durch Inkontaktbringen des Vorpolymers mit einem Gemisch, umfassend Ethylen und mindestens ein 3 bis 12 Kohlenstoffatome enthaltendes $\alpha$-Olefin, in einem derartigen Verhältnis, daß das Ethylen zwischen 80 und 90% des Gesamtvolumens der zu polymerisierenden Olefine wiedergibt.

## Revendications

**1.** Procédé pour la fabrication en phase gazeuse de polymères d'éthylène ou de copolymères d'éthylène contenant, en poids, plus de 80% d'éthylène et moins de 20% d'une ou plusieurs alpha-oléfines contenant de 3 à 12 atomes de carbone, caractérisé en ce que:

(1) le procédé utilise un catalyseur de type Ziegler-Natta obtenu en formant un support de dichlorure de magnésium préactivé avec un composé organique donneur d'électrons D$^1$ exempt d'hydrogène labile pour former un support comprenant 80 à 99% en moles de dichlorure de magnésium et de 1 à 20% en moles de D$^1$, support qui est sous forme de particules sphériques qui possèdent un diamètre moyen en masse de 5 à 100 $\mu$m et une distribution granulométrique telle que le rapport du diamètre moyen en masse Dn au diamètre moyen en nombre Dn soit inférieur à 2, et en mettant en contact le support successivement avec:

(a) au moins un composé donneur d'électrons $D^2$, contenant un hydrogène labile,

(b) un composé donneur d'électrons $D^3$ qui est un ester d'acide aromatique,

(c) 2 à 20 moles de tétrachlorure de titane par mole de magnésium, puis en retirant le tétrachlorure de titane non imprégné en excès par au moins une opération de lavage, et

(d) avec 2 à 20 moles de tétrachlorure de titane par mole de magnésium,

ledit catalyseur ayant une teneur en titane de 4 à 10% en moles par mole de magnésium

2) le procédé consiste

(a) dans une première étape, à prépolymériser le catalyseur en mettant ledit catalyseur en contact avec (i) au moins une alpha-oléfine contenant de 2 à 12 atomes de carbone et (ii) un cocatalyseur (A) composé d'au moins un composé organométallique d'un métal appartenant au groupe II ou III de la Classification Périodique des Eléments, le rapport molaire du métal dans le cocatalyseur au titane dans le catalyseur étant compris entre 1 et 10 et,

(b) dans une seconde étape, à effectuer une réaction de polymérisation en phase gazeuse dans un réacteur à lit fluidisé en mettant le prépolymère en contact avec l'éthylène ou avec un mélange comprenant de l'éthylène et au moins une alpha-oléfine contenant de 3 à 12 atomes de carbone, dans une proportion telle que l'éthylène représente plus de 80% du volume total des oléfines à polymériser.

2. Procédé selon la revendication 1, caractérisé en ce que le composé organique donneur d'électrons $D^1$ est choisi parmi les éthers, les sulfones, des sulfoxydes, les phosphines, les thioéthers, les amines et les amides.

3. Procédé selon l'une des revendications 1 à 2, caractérisé en ce que le support préactivé comprend de 80 à 95% en moles de dichlorure de magnésium et de 5 à 20% en moles du composé organique donneur d'électrons $D^1$.

4. Procédé selon l'une des revendications 1 à 3, caractérisé en ce que le composé donneur d'électrons contenant un hydrogène labile $D^2$ est choisi parmi l'eau, un alcool et les phénols.

5. Procédé selon l'une des revendications 1 à 4, caractérisé en ce que le prépolymère est obtenu par polymérisation d'au moins une alpha-oléfine choisie parmi l'éthylène, le propylène, le 1-butène, le 1-hexène, le 4-méthyl-1-pentène, le 1-octène et le 1-dodécène.

6. Procédé selon l'une des revendications 1 à 5, caractérisé en ce que la prépolymérisation est effectuée en suspension dans un hydrocarbure saturé liquide à une température comprise entre 20°C et 80°C ou en phase gazeuse à une température comprise entre 10°C et 60°C, et à une pression comprise entre 0,1 et 5 MPa.

7. Procédé selon l'une des revendications 1 à 6, caractérisé en ce que la polymérisation est effectuée en mettant le prépolymère en contact avec un mélange gazeux contenant l'éthylène et au moins une alpha-oléfine choisie parmi le propylène, le 1-butène, le 1-hexène, le 4-méthyl-1-pentène, le 1-octène et le 1-dodécène.

8. Procédé selon l'une des revendications 1 à 7, caractérisé en ce que la vitesse de fluidisation dans le réacteur à lit fluidisé est supérieure à 40 cm/s.

9. Procédé selon l'une des revendications 1 à 8, caractérisé en ce que la polymérisation en phase gazeuse est effectuée à une température comprise entre 0 et 120°C et à une pression comprise entre 0,1 et 5 MPa.

10. Polyéthylènes linéaires très basse densité qui possèdent une densité relative comprise entre 0,880 et 0,910, se composant de copolymères d'éthylène et d'une ou plusieurs alpha-oléfines contenant de 3 à 12 atomes de carbone, qui possèdent une teneur pondérale en motifs dérivés d'éthylène supérieure à 80% et inférieure à 90%, qui possèdent une teneur en titane inférieure à 5 ppm et qui sont sous forme d'une poudre qui a une densité apparente comprise entre 0,350 et 0,500 g/cm$^3$ qui se compose de particules sphériques qui possèdent un diamètre moyen en masse Dm compris entre 250 et 1 000 μm et un rapport entre Dm et le diamètre moyen en nombre Dn inférieur à 3.

11. Procédé selon la revendication 1 pour la fabrication en phase gazeuse de polyéthylènes très basse densité contenant en poids, plus de 80% et moins de 90% d'éthylène, et une ou plusieurs alpha-oléfines contenant de 3 à 12 atomes de carbone, caractérisé en ce que:

(1) le procédé utilise un catalyseur de type Ziegler-Natta obtenu en formant un support de dichlorure de magnésium préactivé avec un composé organique donneur d'électrons $D^1$ exempt d'hydrogène labile pour former un support comprenant 80 à 99% en moles de dichlorure de magnésium et de 1 à 20% en moles de D$^1$, support qui est sous forme de particules sphériques qui possèdent un diamètre moyen en masse de 5 à 100 µm et une distribution granulométrique telle que le rapport du diamètre moyen en masse Dn au diamètre moyen en nombre Dn soit inférieur à 2, et en mettant en contact le support successivement avec:

(a) au moins un composé donneur d'électrons D$^2$, contenant un hydrogène labile,
(b) un composé donneur d'électrons D$^3$ qui est un ester d'acide aromatique,
(c) du tétrachlorure de titane, puis en retirant le tétrachlorure de titane non imprégné en excès par au moins une opération de lavage, et
(d) avec le tétrachlorure de titane,

2) le procédé consiste

(a) dans une première étape, à prépolymériser le catalyseur en mettant ledit catalyseur en contact avec (i) au moins une alpha-oléfine contenant de 2 à 12 atomes de carbone et (ii) un cocatalyseur (A) composé d'au moins un composé organométallique d'un métal appartenant au groupe II ou III de la Classification Périodique des Eléments et,
(b) dans une seconde étape, à effectuer une réaction de polymérisation en phase gazeuse dans un réacteur à lit fluidisé en mettant le prépolymère en contact avec l'éthylène ou avec un mélange comprenant l'éthylène et au moins une alpha-oléfine contenant de 3 à 12 atomes de carbone, dans une proportion telle que l'éthylène représente entre 80 et 90% du volume total des oléfines à polymériser.